# FASCICULE DE BREVET EUROPEEN

(11) **EP 3 373 118 B1**
(45) Date de publication et mention de la délivrance du brevet: **12.05.2021**
(21) Numéro de dépôt: 18160890.2
(22) Date de dépôt: 09.03.2018
(51) Int. Cl.: G06F 3/03, G06F 3/01, G06F 3/0482

(54) **INTERFACE HOMME MACHINE COMPORTANT UNE CAMÉRA ET UN MARQUEUR**
MENSCH-MASCHINEN-SCHNITTSTELLE MIT EINER KAMERA UND EINEM MARKER
HUMAN/MACHINE INTERFACE COMPRISING A CAMERA AND A MARKER

(30) Priorité: 10.03.2017 FR 1751991
(43) Date de publication de la demande: 12.09.2018
(73) Titulaire: Institut Mines-Telecom, 75014 Paris (FR)
(72) Inventeur: MEULLE, Olivier, 91600 SAVIGNY-SUR-ORGE (FR)
(74) Mandataire: Nony

(56) Documents cités:
- EP-A2- 2 752 732
- WO-A1-2006/036069
- WO-A1-2015/181685
- US-A1- 2009 315 740
- US-A1- 2014 344 766
- US-A1- 2015 371 083
- US-A1- 2016 349 926

## Description

La présente invention concerne les interfaces homme machine et plus particulièrement celles destinées aux personnes lourdement handicapées qui ne sont plus aptes à manipuler les outils conventionnels tels que les claviers physiques ou souris d'ordinateurs qui demandent une force musculaire et une précision du mouvement qui manquent à certaines personnes.

Des interfaces homme machine ont été proposées pour permettre à certaines personnes souffrant de handicaps d'interagir plus facilement dans un environnement graphique à l'aide d'un pointeur.

On a ainsi proposé des souris avec boutons déportés. Cette solution requiert néanmoins de déplacer la souris, dont le poids est classiquement d'environ 80 g, sur une surface très lisse avec une grande précision du geste.

Des systèmes de suivi du regard permettant de suivre le mouvement de l'iris ont également été proposés. Leur utilisation génère une fatigue oculaire, peut rendre difficile le suivi du mouvement de l'iris en cas de port de lunettes, et des systèmes annexes permettant de remplacer le clic sur un bouton de souris doivent toujours être utilisés, qui nécessitent l'installation de logiciels spécifiques opérant le plus souvent sous « Windows » (marque déposée) exclusivement. De plus, une phase de calibration peut s'avérer nécessaire.

Il a encore été proposé des pavés tactiles, lesquels imposent de garder les doigts au-dessus de la surface tactile, ce qui peut générer fatigue et gêne.

Enfin, des solutions à joystick actionné par le menton ou l'arrière de la tête sont également disponibles, mais offrent des possibilités de commande limitées par rapport à ce que peut offrir une interface conventionnelle telle qu'une souris d'ordinateur.

De plus, ces interfaces spécialisées sont généralement proposées à un prix élevé et souvent avec des limites en ce qui concerne les possibilités d'interaction avec des outils informatiques grand public tels que ceux fonctionnant sous « Windows » (marque déposée), « Android » (marque déposée) ou « iOS » (marque déposée).

La demande WO 2006/036069 vise à fournir un appareil avec des méthodes pour des opérations d'entrée/sortie impliquant des systèmes de traitement de l'information, où l'espace disponible pour le clavier ou d'autres outils d'entrée mécaniques est restreint, ou lorsque l'espace disponible pour l'affichage est restreint.

L'invention vise à proposer une interface homme machine convenant à des personnes lourdement handicapées, qui soit simple à utiliser, performante, d'un coût compatible avec une diffusion à large échelle et capable d'interagir avec des outils informatiques conventionnels tels que micro-ordinateur, smartphone ou tablette.

L'invention a ainsi pour objet une interface homme machine selon la revendication 1.

Une telle interface ne nécessite pas de ressources informatiques très puissantes, et peut ainsi être de coût relativement faible.

De plus, une telle interface est facilement interfaçable PnP avec les équipements informatiques conventionnels tels que les micro-ordinateurs, et peut avantageusement remplacer un clavier ou une souris conventionnels.

L'interface est également aisément paramétrable, permettant une personnalisation aisée, adaptée aux besoins de l'utilisateur et à son handicap.

Un intérêt de l'interface selon l'invention est de ne pas avoir d'action à exercer sur un objet tangible autre que le marqueur éventuel, si celui-ci est réalisé sous la forme d'un objet collé sur la peau. Cela simplifie grandement l'actionnement de l'interface par son utilisateur, notamment quand celui-ci dispose d'une force musculaire réduite.

L'interface selon l'invention peut facilement être réalisée si on le souhaite de façon à être multiplateforme, c'est-à-dire que l'interface peut être configurée pour être automatiquement reconnue par divers systèmes d'exploitation sans avoir à ajouter un driver ou un logiciel spécifique à l'environnement de la plateforme, par exemple au même titre qu'une souris informatique standard.

L'interface selon l'invention peut facilement être embarquée sur un fauteuil roulant.

L'interface selon l'invention peut être alimentée via une batterie interne ou externe à l'interface. L'alimentation se fait par exemple par prise USB standard ou autrement. L'interface peut être alimentée par une batterie externe de téléphone portable par exemple.

### Marqueur

Le marqueur précité peut être un motif imprimé ou collé. Son poids est ainsi négligeable et ne génère aucune fatigue additionnelle.

Lorsque le marqueur est collé, la colle utilisée peut permettre le cas échéant un repositionnement facile. Il peut s'agir d'un adhésif sensible à la pression. Le marqueur, lorsque collé, peut être hypoallergénique et/ou respirant, étant par exemple en un matériau perméable à l'air, microporeux. Le marqueur est de préférence souple, de façon à ne pas générer de gêne.

De façon à être facilement manipulable et détectable, la plus grande dimension du marqueur peut être inférieure ou égale à 3 cm et la plus petite dimension du marqueur peut être supérieure ou égale à 0,5 cm. L'invention n'est toutefois pas limitée à un marqueur de forme et/ou de dimensions particulières.

Le marqueur peut être disposé sur toute partie du corps du sujet ayant une mobilité volontaire, choisie par exemple parmi l'un de ses membres supérieurs ou inférieurs, notamment l'un de ses membres supérieurs, notamment l'une de ses mains, ou une partie de son visage, notamment son front.

Le marqueur peut comporter un revêtement réfléchissant, notamment à base de micro-catadioptres, de façon à réfléchir la lumière incidente et faciliter sa détection par la caméra.

### Dispositif d'affichage

Le dispositif d'affichage peut être de tout type connu adapté à l'usage qui en est fait. De préférence, le dispositif d'affichage comporte un écran, ce dernier étant de préférence de diagonale supérieure ou égale à 15 cm de façon à assurer une bonne visibilité du pointeur par l'utilisateur de l'interface.

L'écran peut être de toute résolution, et notamment de résolution supérieure à la résolution VGA en termes de quantité de pixels, et de préférence avoir une résolution au moins aussi bonne que 800^{∗}480.

L'écran peut être de type LCD, OLED, e-lnk ou autre.

L'écran peut être tactile, le cas échéant, afin de faciliter le paramétrage par une tierce personne.

De préférence, l'écran affiche non seulement le pointeur mais également un retour visuel de la caméra, notamment en sous-brillance, pour faciliter le paramétrage de l'interface et son utilisation. Avantageusement, l'interface est réalisée de façon à permettre de supprimer ce retour visuel si l'utilisateur le souhaite ; dans ce cas, la seule information mobile sur l'écran peut être le pointeur reflétant le positionnement du marqueur dans le champ de vue de la caméra. Le pointeur est affiché avec l'information matérialisant la ou les zones actives.

On peut donner au pointeur toute forme, et par exemple une forme différente de celle du marqueur, par exemple la forme d'une croix ou d'une flèche alors que le marqueur présente la forme d'un disque. De préférence, on ne retient du marqueur sur l'écran que ses coordonnées x,y en utilisation. La vision du marqueur tel que filmé par la caméra peut être utile éventuellement pour le calibrage de la caméra face au marqueur.

### Caméra

Au sens de l'invention, le terme « caméra » ne doit pas être compris de façon limitative et englobe tout système d'acquisition optique multi-pixel, de préférence matriciel et mono-capteur.

La caméra peut être de tout type connu convenant au suivi sans contact des déplacements du marqueur.

La caméra peut être couleur ou monochrome.

De préférence, la caméra est capable d'acquérir au moins 20 images par seconde, afin de réagir à des déplacements en temps réel et de faible amplitude.

De préférence, sa résolution est au moins VGA (640^{∗}480 pixels) et de préférence mégapixel.

La caméra peut comporter un illuminateur IR intégré.

De préférence, la caméra est orientée vers la partie du corps du sujet portant le marqueur, notamment à une distance inférieure ou égale à 1m.

La caméra peut être assujettie à un support fixé sur un fauteuil roulant. De préférence ce support est orientable de façon à permettre d'orienter au mieux la caméra par rapport à la partie du corps à observer. Ce support peut être rabattable et/ou télescopique, le cas échéant, afin de pouvoir réduire l'encombrement de l'interface lorsqu'elle n'est pas utilisée.

Lorsque l'interface est mise en œuvre à l'aide de la plateforme informatique « Raspberry Pi » (marque déposée), la caméra est par exemple une caméra dédiée à l'environnement de cette plateforme, telle que la caméra dite « v2 », ayant une résolution d'au moins 5 mégapixels.

La caméra peut encore être une webcam de tout type.

De préférence, la caméra permet de régler la focalisation de l'objectif.

### Plateforme informatique

L'invention peut être mise en œuvre à l'aide de tout système informatique capable de recevoir les données de la caméra, d'afficher les informations requises sur le dispositif d'affichage, et d'échanger des données avec un environnement externe sur lequel l'utilisateur souhaite agir.

De préférence, l'interface comporte un moyen de transmission, notamment sans fil, transmettant l'action à déclencher à un dispositif informatique, de telle sorte que le dispositif informatique accomplisse l'action. Ce dispositif informatique externe est par exemple un ordinateur personnel, un smartphone, une tablette, une TV connectée, un appareil électroménager connecté, une voiture connectée, un serveur d'un réseau sans fil, cette liste n'étant pas limitative.

De préférence, l'interface est réalisée de telle sorte qu'elle puisse être reconnue par le dispositif informatique avec lequel elle échange, sans besoin d'installation préalable de drivers spécifiques, car fonctionnant avec les drivers installés par défaut sur ces systèmes d'exploitation.

Par exemple, l'interface est configurée de manière à être reconnue par un système d'exploitation « Windows » (marque déposée), « Android » (marque déposée), « iOS » (marque déposée), « Linux » (marque déposée), etc. comme n'importe quel clavier ou souris d'ordinateur.

L'interface peut comporter un module « Wifi » (marque déposée), « Bluetooth » (marque déposée), Ethernet et/ou un module RFID permettant de dialoguer avec les micro-ordinateurs, smartphones, tablettes et autres objets connectés.

En particulier, elle peut être réalisée pour s'appairer en « Bluetooth » (marque déposée) avec l'appareil auquel elle est connectée, et être reconnue par celui-ci comme une souris standard.

L'interface est avantageusement réalisée de telle façon à émuler des données transmises par une souris ou un clavier à un PC, notamment opérant sous « Windows » (marque déposée), « Android » (marque déposée), « iOS » (marque déposée), « Linux » (marque déposée) ou tout autre système d'exploitation.

### Zone(s) active(s)

L'interface selon l'invention définit au moins une zone active, et mieux plusieurs zones actives, chaque zone active déclenchant une ou plusieurs actions prédéterminées.

L'interface définit également au moins une zone non active, ne déclenchant aucune action lorsque le pointeur est dessus. Plus spécifiquement, l'ensemble de l'arrière-plan affiché ne contenant pas de zone active peut être considéré comme une zone non active, c'est-à-dire une zone de repos et de non d'action pour l'utilisateur.

L'invention, n'étant pas liée à l'actionnement d'un joystick, mais reposant sur le suivi optique d'un mouvement, permet une grande liberté dans le paramétrage de ce qui peut déclencher une action.

Une action est déclenchée lorsque le pointeur est amené dans la zone active et y reste pendant une durée prédéfinie, notamment comprise entre 1 et 1000 ms, par exemple au moins 20 ms. De préférence, ce délai avant action est paramétrable zone par zone. Le cas échéant, plusieurs actions différentes prédéfinies peuvent être effectuées en fonction de la durée pendant laquelle le pointeur reste dans une zone active ; par exemple, durée courte, pas d'action, durée entre t1 et t2, premier type d'action et durée supérieure à t2, deuxième type d'action.

Par exemple encore, l'action peut être maintenue en continu tant que le pointeur ne sort pas de la zone active correspondante.

Au moins une zone active peut déclencher l'affichage d'un menu contextuel définissant lui-même des sous-zones actives associées chacune à une action. Il est possible le cas échéant de cascader plusieurs menus contextuels, avec le venue du pointeur dans une zone active qui déclenche l'affichage d'un menu contextuel, puis la venue du pointeur dans une sous-zone active du menu contextuel qui déclenche l'affichage d'un autre menu contextuel , avec lui-même plusieurs sous-zones actives. Le menu contextuel et/ou le sous menu peut être centré par rapport aux coordonnées du pointeur, optimisant ainsi le déplacement nécessaire au déclenchement de la prochaine action.

L'interface est paramétrée de façon à permettre de reproduire certaines fonctions classiques d'une souris sur une interface graphique usuelle, telles que simple clic, double clic, clic maintenu/relâché (par exemple pour réaliser des glisser/déposer) et clic contextuel (bouton droit) ainsi que la molette pour le défilement (« scroll »).

Une zone active peut être réservée à un appel d'urgence, commandant l'émission d'un message prédéterminé vers au moins un destinataire préenregistré. Par exemple, la présence du pointeur sur cette zone active d'urgence déclenche un appel téléphonique vers un ou plusieurs numéros prédéterminés et/ou l'envoi de SMS et/ou d'emails par « Bluetooth » (marque déposée) ou par tout autre canal d'envoi à des destinataires préenregistrés, pour les prévenir.

L'interface peut être réalisée de façon à faire apparaître un clavier visuel sur l'écran du dispositif d'affichage, avec prédiction de mots personnalisés. Un avantage est que ce clavier visuel peut être le même quel que soit l'appareil auquel l'interface est connectée.

L'interface peut être configurée de telle sorte qu'au moins une zone active déclenche l'affichage d'un menu contextuel définissant lui-même des sous-zones actives associées chacune à une action.

L'interface peut comporter au moins un contacteur déporté. Ce dernier peut être actionné pour effectuer un clic de souris par exemple.

L'interface peut être agencée pour générer si l'utilisateur le souhaite au moins un retour sonore ou vocal pour indiquer l'entrée dans une zone active. Le cas échéant, l'interface permet de personnaliser le retour sonore ou vocal en fonction de la zone active concernée.

L'interface peut être configurée pour permettre à l'utilisateur d'effectuer un choix personnalisé de paramètres de fonctionnement, par exemple la forme, dimension et l'emplacement de la ou des zones actives et/ou la ou les actions associées à chaque zone active.

### Procédé de personnalisation de l'interface

L'invention a encore pour objet, selon un autre de ses aspects, un procédé pour personnaliser une interface selon la revendication 13.

Le procédé peut comporter la sélection de la forme et de l'emplacement de la zone active dans un champ image du champ de vue de la caméra.

Lorsque l'utilisateur peut choisir parmi plusieurs formes proposées pour définir chaque zone active, il peut sélectionner celles dont le contour est le plus adapté compte-tenu de l'environnement dans lequel évolue le marqueur. Par exemple, quelqu'un disposant de plus de motricité et de précision dans le geste pourra sélectionner des zones actives de plus petite taille sur l'écran, plus difficiles à sélectionner, mais offrant la possibilité d'en disposer un plus grand nombre de façon à bénéficier de plus de fonctionnalités dans la sélection des actions.

Le procédé peut ainsi comporter le choix par l'utilisateur de l'emplacement d'une zone active au sein du champ de déplacement du pointeur sur l'écran du dispositif d'affichage, et notamment effectuer ce choix en fonction de la nature de son handicap, de façon à adapter au mieux l'interface à celui-ci. L'utilisateur peut également paramétrer l'action qui est effectuée lorsque le pointeur est amené dans cette zone active, par exemple clic gauche ou clic droit, en fonction par exemple de la fréquence attendue de déclenchement de cette action, afin de réserver la ou les actions les plus fréquemment demandées aux zones actives les plus faciles à atteindre.

Le procédé peut comporter la sélection d'une durée de présence du pointeur dans une zone active, à partir de laquelle une action est déclenchée.

Le procédé peut comporter l'enregistrement d'un paramétrage de la ou des zones actives. Cela peut permettre par exemple à l'utilisateur de disposer de plusieurs paramétrages mémorisés optimisés pour des applications différentes ; par exemple, un jeu de paramètres définit un environnement graphique sur l'écran de l'interface qui est adapté à émuler une souris d'ordinateur, en vue de connecter l'interface à un micro-ordinateur, et un autre jeu de paramètres mémorisés définit un environnement graphique différent, optimisé par exemple pour émuler un pavé numérique, et un autre jeu de paramètres un autre environnement, optimisé par exemple pour émuler les boutons de commande d'une interface domotique. L'interface peut encore permettre de mémoriser un jeu de paramètres avec des positions de zones actives différentes en fonction de la fatigabilité ou de la position de l'utilisateur qui définit son amplitude d'interaction avec l'interface selon l'invention.

La présente description comprend aussi un produit programme d'ordinateur comportant un support et enregistrées sur ce support des instructions lisibles par un processeur pour lorsqu'exécutées, provoquer l'affichage sur un écran d'un environnement graphique présentant un pointeur et au moins une zone active associée à une action prédéfinie, traiter un flux vidéo comportant l'image d'un marqueur pour transformer un déplacement du marqueur en un déplacement du pointeur sur l'écran, et détecter lorsque le pointeur évolue de façon prédéfinie dans la zone active pour en fonction du résultat de cette détection, effectuer ladite action. Un tel programme peut être mis en œuvre par l'interface selon l'invention, telle que définie ci-dessus.

L'invention pourra être mieux comprise à la lecture de la description détaillée qui va suivre, d'exemples de mise en œuvre non limitatifs de celle-ci, et à l'examen du dessin annexé, sur lequel :
- la figure 1 représente de façon schématique et partielle une interface selon l'invention et l'écran d'un ordinateur auquel l'interface est connectée,
- la figure 2 représente un exemple d'affichage sur l'écran de l'interface de la figure 1,
- la figure 3 est un exemple de menu contextuel,
- la figure 4 est un exemple d'environnement graphique permettant le paramétrage de l'interface selon l'invention, et
- la figure 5 illustre une variante de réalisation de l'environnement graphique de l'interface selon l'invention.

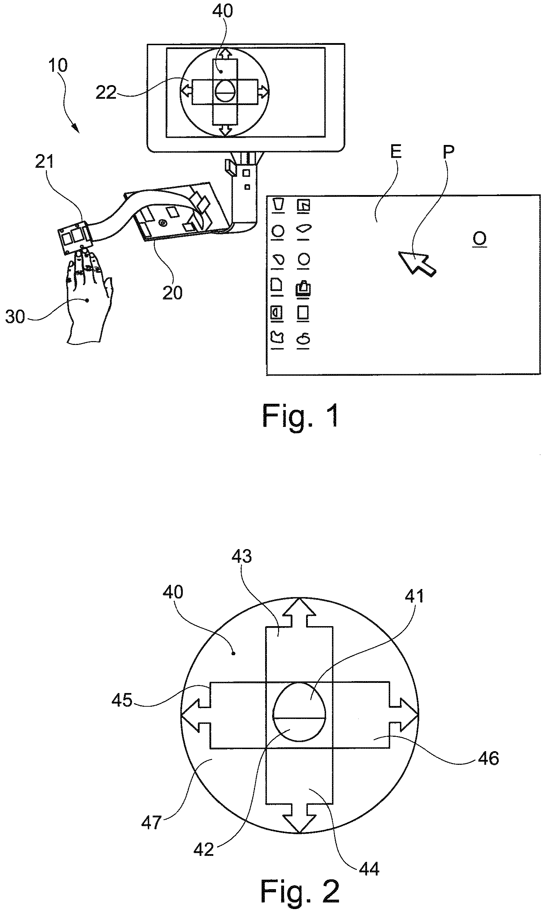

On a représenté à la figure 1 un exemple d'interface 10 homme machine selon l'invention, comportant une plateforme informatique centrale 20, une caméra 21 reliée à la plateforme 20, et un dispositif d'affichage 22, également relié à la plateforme.

L'interface 10 est connectée dans cet exemple à un micro-ordinateur dont on a représenté l'écran E d'accueil du système d'exploitation, par exemple « Windows » (marque déposée).

L'interface 10 est ici utilisée pour émuler le fonctionnement d'une souris reliée à ce micro-ordinateur, afin de déplacer un pointeur P et d'effectuer diverses actions en fonction notamment de la position du pointeur P sur l'écran E.

La plateforme 20 est par exemple une carte de type « Raspberry Pi » (marque déposée), nativement munie d'un module de communication « Bluetooth » (marque déposée) ou « Wifi » (marque déposée), ou comportant un tel module connecté sur un port USB.

La plateforme 20 peut être connectée par une liaison filaire au micro-ordinateur ; en variante, la connexion s'effectue sans fil par « Bluetooth » (marque déposée) ou « Wifi » (marque déposée) grâce aux possibilités de communication précitées.

La plateforme 20 est programmée de telle sorte que le protocole de connexion de la plateforme au micro-ordinateur et le format d'échange de données avec celui-ci conduisent le micro-ordinateur à voir la plateforme 20 comme une souris d'ordinateur, sans la nécessité d'installation préalable d'un driver ou autre logiciel spécifique. Ainsi, le micro-ordinateur reçoit des signaux correspondant aux données habituellement transmises par ce type de périphérique, à savoir une information concernant un appui sur les boutons gauche et droit, et une information concernant la direction de déplacement de la souris.

La plateforme 20 reçoit de la caméra 21 une image d'une partie de l'utilisateur portant un marqueur 30, par exemple une impression réalisée à l'aide d'un tampon ou un patch collé sur la peau et dont l'aspect est choisi pour contraster avec la couleur de celle-ci.

La plateforme 20 est agencée pour traiter l'image reçue par la caméra 21 afin de déterminer le mouvement du marqueur 30, à savoir la direction de déplacement de celui-ci, et la vitesse de déplacement et/ou sa position relativement à une position de référence à un instant donné.

La plateforme 20 est programmée pour envoyer au dispositif d'affichage une image comportant un pointeur 40 dont le mouvement sur l'écran 22 dépend de celui du marqueur 30 qui est détecté. L'écran 22 affiche également des repères délimitant diverses zones actives correspondant à des actions prédéfinies qui s'exécutent après que le pointeur 40 soit resté pendant une durée prédéfinie suffisante, par exemple au moins de 20 ms, dans la zone active dont on souhaite déclencher l'action correspondante. Cela permet lorsque le pointeur 40 est déplacé vers une zone active donnée, de traverser avec celui-ci une ou plusieurs autres zones actives sans déclencher les actions associées à cette ou ces autres zones actives.

Plus particulièrement, dans l'exemple considéré, l'interface affiche au centre sur l'écran 22 des première et deuxième zones actives 41 et 42, celles-ci étant entourées dans les quatre directions (haut, bas, gauche, droite) par quatre zones respectives 43 à 46.

L'interface peut afficher également un retour image en arrière-plan de la partie du corps portant le marqueur, de façon à faciliter le positionnement du marqueur 30 dans le champ de la caméra 22.

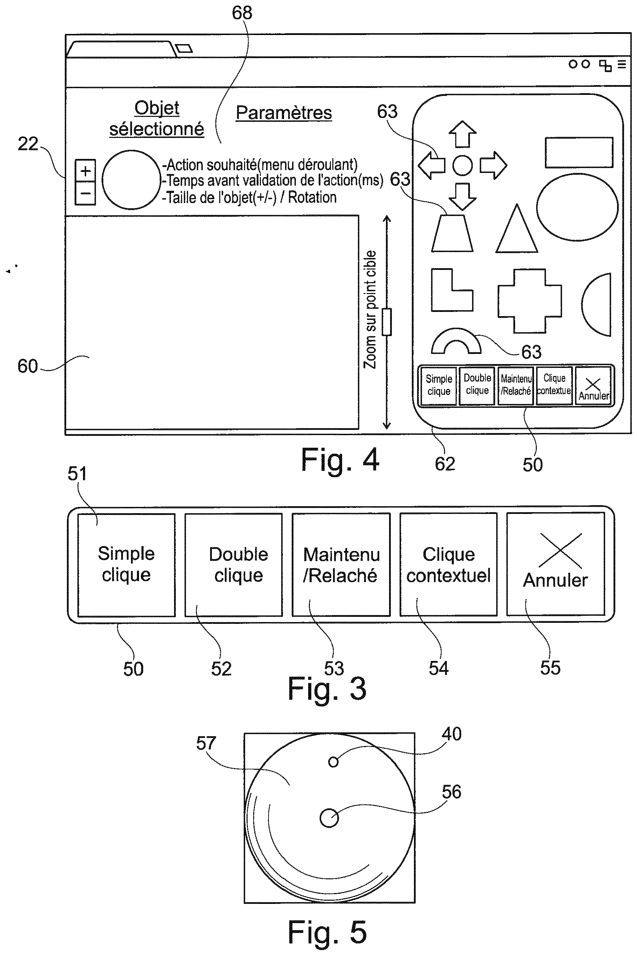

Dans l'exemple décrit, la première zone active 41 est associée au clic gauche, la deuxième zone 42 à un menu contextuel 50 correspondant à différents types de clics, représenté à la figure 3, et les zones 43 à 46 à un déplacement du pointeur P sur l'écran E dans les directions correspondantes.

Lorsque le pointeur 40 est placé dans la zone inactive 47 à l'extérieur des zones actives 41 à 46, aucune action ne s'effectue. La zone inactive correspond à l'arrière-plan de l'environnement graphique de l'interface.

Lorsque le pointeur 40 est placé dans la deuxième zone active 42 pendant une durée suffisante, le menu contextuel 50 s'affiche sur l'écran 22. L'utilisateur peut alors déplacer le pointeur 40 sur l'une des sous-zones actives 51 à 55 du menu 50, pour effectuer l'action correspondante. Dans l'exemple considéré, les sous-zones 51 à 55 correspondent respectivement à un simple clic, à un double clic, à un maintenu/ relâché, à un clic contextuel et à une annulation permettant de faire disparaître le menu contextuel.

Pour utiliser l'interface 10 afin d'émuler une souris d'ordinateur, l'utilisateur connecte la plate-forme au micro-ordinateur, par exemple par un câble USB ou par une connexion sans fil, notamment « Bluetooth » (marque déposée).

L'interface 10 est reconnue automatiquement, sans besoin de télécharger un driver au préalable, comme une souris d'ordinateur.

On suppose ici que le marqueur 30 est placé sur le dessus de la main, dans le champ de la caméra 21.

L'utilisateur positionne le pointeur 40 dans la zone inactive lorsqu'il souhaite ne pas agir sur le micro-ordinateur.

Pour effectuer une action, par exemple déplacer le pointeur P vers la droite sur l'écran E, l'utilisateur bouge sa main dans le champ de la caméra de manière à déplacer le pointeur 40 sur la zone active 46. Tant que le pointeur 40 reste dans cette zone, l'interface envoie au micro-ordinateur auquel elle est connectée, des données qui amènent le pointeur P à se déplacer vers la droite. Lorsque l'utilisateur souhaite immobiliser le pointeur P, il bouge sa main pour ramener le pointeur 40 dans la zone inactive 47. Si l'utilisateur souhaite effectuer un clic bouton gauche, il bouge sa main pour amener le pointeur 40 dans la zone 41, ce qui déclenche après une durée de présence suffisante du pointeur 40 dans cette zone 41 l'envoi au micro-ordinateur de données correspondant à un clic gauche de la souris émulée.

Pour effectuer un maintenu/relâché, l'utilisateur amène le pointeur 40 sur la zone active 42, et l'y laisse une durée suffisante, ce qui déclenche l'affichage des sous-zones actives 50 à 55 du menu contextuel 50. L'utilisateur peut alors déplacer le pointeur 40 jusqu'à la sous-zone active 53, et maintenir le pointeur 40 dans cette zone, afin d'émuler un clic maintenu. Ensuite, le menu contextuel 50 cesse de s'afficher, et l'utilisateur peut déplacer le pointeur P sur l'écran E en sélectionnant l'une des zones actives 43 à 46 avec le pointeur 40 sur l'écran 22. Une fois le pointeur P amené là où l'utilisateur le souhaite, il peut à nouveau sélectionner la zone active 42 pour provoquer l'affichage du menu contextuel, puis amener le pointeur 40 dans la zone 53 pour déclencher l'action d'émulation du relâchement du bouton de clic de la souris.

Bien entendu, il ne s'agit que d'un exemple de possibilité parmi d'autres de paramétrage de l'environnement graphique de l'interface selon l'invention.

De préférence, le fonctionnement de l'interface 10 selon l'invention est personnalisable.

A cet effet, l'interface 10 peut être configurée pour pouvoir passer dans un mode de programmation où elle affiche sur l'écran 22 comme illustré à la figure 4 un environnement permettant de choisir d'une part le positionnement des zones actives dans un cadre 60 matérialisant le champ de vue de la caméra, dans lequel le pointeur 40 peut se déplacer, et d'autre part la forme de chaque zone active et l'action déclenchée par l'arrivée du pointeur 40 dans une zone active.

La programmation peut être effectuée par un opérateur pouvant manipuler une souris, connectée à la plateforme 20.

Un cadre 62 permet d'afficher un ensemble d'icônes disponibles 63 pour définir les zones actives (encore appelés objets), ainsi qu'un ou plusieurs menus contextuels 50 définissant des sous-zones actives.

L'interface peut être agencée pour permettre à l'utilisateur de positionner par un clic maintenu/relâché avec la souris l'icône 63 de son choix dans le cadre 60. Une zone active peut être définie par une seule icône ou en variante par l'assemblage bord à bord de plusieurs icônes.

Ensuite, un ou plusieurs menus 68 peuvent être ouverts pour sélectionner un certain nombre de paramètres associés à l'icône sélectionnée, tels que l'action souhaitée, par exemple déplacement du pointeur P sur l'écran E dans une direction particulière, ou émulation d'un clic sur bouton gauche, le nombre de répétitions de l'action, la durée avant validation de l'action, c'est-à-dire le laps de temps devant s'écouler à partir du moment où le pointeur 40 sur superpose à l'icône pour que l'action correspondante se déclenche.

Le choix de la forme des icônes sélectionnées peut se faire notamment de façon à éviter de parasiter le bon fonctionnement de l'interface avec des objets qui se trouveraient dans le champ de vue de la caméra 21.

L'interface 10 peut être réalisée de façon à permettre de modifier la taille et /ou l'orientation de chaque icône dans le cadre 60.

L'interface 10 peut être réalisée de telle sorte que pour mettre en place un menu contextuel 50, il suffise de déplacer l'icône correspondante du cadre 62 au cadre 51 et de la superposer à celle matérialisant la zone active déclenchant l'affichage de ce menu contextuel.

Un menu contextuel figurant dans le cadre 62 peut être proposé avec des sous-zones correspondant à des actions prédéfinies. En variante, ou additionnellement, l'interface 10 est réalisée de telle façon à permettre de personnaliser le menu contextuel, par exemple définir le nombre de sous-zones et la fonction qui est attribuée à chacune.

De préférence, le jeu de paramètres qui correspond à une personnalisation de l'interface est sauvegardé de façon à permettre à l'utilisateur de définir plusieurs environnements correspondant à différents appareils à commander. Par exemple, un jeu peut servir à émuler le comportement d'une souris d'ordinateur et un autre jeu un pavé numérique.

Dans une variante, l'interface comporte au moins un contacteur qui est actionnable par l'utilisateur pour déclencher une action prédéfinie. Par exemple, l'actionnement du contacteur peut correspondre au clic sur le bouton d'une souris. De préférence, l'interface comporte deux tels contacteurs pour commander respectivement les actions de clic sur les boutons gauche et droit. Ces contacteurs peuvent être raccordé à la plateforme par l'intermédiaire de tout type de connecteur, par exemple de type prise Jack. Les contacteurs sont avantageusement utilisés par les personnes dont le handicap permet néanmoins de les actionner ; dans ce cas, le marqueur 30 peut servir à déplacer le pointeur P de façon omnidirectionnelle et les contacteurs servent à effectuer les clics.

L'invention n'est pas limitée à une simple détection du temps de présence du pointeur 40 dans une zone active pour déclencher l'action correspondante.

L'interface peut ainsi être réalisée de telle sorte que l'action qui est commandée dépende aussi du positionnement relatif du pointeur au sein de la zone active.

Par exemple, on a représenté à la figure 5 un environnement graphique dans lequel la zone centrale 56 sert de repos, étant inactive. Les clics sur les boutons gauche et droit peuvent être réalisés avec les contacteurs précités. Le déplacement du pointeur P sur l'écran s'effectue dans la direction donnée par l'orientation du rayon passant par le centre de la zone 56 et le pointeur 40 dans la zone active 57, et la vitesse de déplacement du pointeur P dépend de la distance au centre ; plus cette distance étant grande, plus la vitesse étant élevée.

Dans une variante, la personnalisation de l'interface s'effectue depuis un logiciel exécuté sur un micro-ordinateur, puis les paramètres sont téléchargés dans l'interface.

De préférence, l'interface repose sur une plateforme informatique telle qu'un « Raspberry Pi » (marque déposée), qui est distincte du micro-ordinateur auquel sont transmises les données émulant le comportement d'une souris. Cela présente l'avantage de pouvoir utiliser une caméra autre que la webcam du micro-ordinateur, et de ne pas nécessiter d'installation préalable de logiciel. Dans une variante de mise en œuvre qui n'est pas couverte par les revendications, on utilise toutefois comme plateforme informatique le micro-ordinateur auquel on souhaite transmettre des actions. Dans ce cas, l'écran de l'interface peut apparaître comme une fenêtre sur l'écran de l'ordinateur que l'on souhaite commander.

## Revendications

1. Interface homme machine (10) configurée pour émuler les données transmises par une souris à un micro-ordinateur, comportant :
- une caméra (21),
- un marqueur (30) à disposer sur une partie du corps d'un sujet et à placer dans le champ de la caméra (21),
- un dispositif d'affichage (22) configuré pour afficher un pointeur (40) image du marqueur (30) filmé par la caméra, le dispositif d'affichage affichant au moins une zone active (41,...,46; 57) correspondant au déclenchement d'au moins une action prédéterminée, l'interface étant configurée de telle sorte que l'action soit déclenchée lorsque le pointeur (40) est amené dans la zone active et évolue d'une façon prédéfinie relativement à celle-ci,
l'action comportant au moins une fonction classique d'une souris sur une interface graphique usuelle, choisie parmi le simple clic, le double clic, le clic maintenu/relâché, le clic contextuel et la molette pour le défilement, l'action étant déclenchée lorsque le pointeur (40) est amené dans la zone active et y reste pendant une durée prédéfinie, l'interface définissant au moins une zone non active (47; 56) ne déclenchant aucune action, l'interface comportant un moyen de transmission transmettant l'action à déclencher au micro-ordinateur, de telle sorte que le micro-ordinateur accomplisse l'action.

2. Interface selon la revendication 1, le marqueur (30) étant un motif imprimé ou collé.

3. Interface selon la revendication 1 ou 2, la plus grande dimension du marqueur (30) étant inférieure ou égale à 3 cm et la plus petite dimension du marqueur étant supérieure ou égale à 0,5 cm.

4. Interface selon l'une quelconque des revendications précédentes, plusieurs actions différentes prédéfinies étant effectuées en fonction de la durée pendant laquelle le pointeur reste dans la zone active.

5. Interface selon l'une quelconque des revendications précédentes, dans laquelle le moyen de transmission est sans fil, l'interface étant de préférence configurée de telle sorte que l'échange de données avec le micro-ordinateur puisse se faire sans besoin d'installation préalable de logiciels spécifiques sur le micro-ordinateur, que ce dernier opère notamment sous « Windows » (marque déposée), « Android » (marque déposée) ou « iOS » (marque déposée).

6. Interface selon l'une quelconque des revendications précédentes, la durée prédéfinie étant comprise entre 1 et 1000 ms.

7. Interface selon l'une quelconque des revendications précédentes, l'action étant maintenue en continu tant que le pointeur (40) ne sort pas de la zone active.

8. Interface selon l'une quelconque des revendications 1 à 6, au moins une zone active (42) déclenchant l'affichage d'un menu contextuel (50) définissant lui-même des sous-zones actives associées chacune à une action.

9. Interface selon l'une quelconque des revendications précédentes, comportant au moins un contacteur déporté.

10. Interface selon l'une quelconque des revendications précédentes, étant configurée pour permettre à l'utilisateur d'effectuer un choix personnalisé de paramètres de fonctionnement, parmi la forme, la dimension et l'emplacement de la ou des zones actives et/ou la ou les actions associées à chaque zone active.

11. Interface selon l'une quelconque des revendications précédentes, étant configurée de façon à faire apparaître un clavier visuel sur l'écran du dispositif d'affichage, avec prédiction de mots personnalisés.

12. Interface selon l'une quelconque des revendications précédentes, une zone active étant réservée à un appel d'urgence, commandant l'émission d'un message prédéterminé vers au moins un destinataire préenregistré.

13. Procédé pour personnaliser une interface selon l'une quelconque des revendications précédentes, comportant l'affectation d'au moins une action à une zone active et la sélection d'une durée de présence du pointeur dans une zone active à partir de laquelle une action est déclenchée.

14. Procédé selon la revendication précédente comportant la sélection de la forme et de l'emplacement de la zone active dans un champ image du champ de vue de la caméra.

## Patentansprüche

1. Mensch-Maschine-Schnittstelle (10), welche dafür ausgelegt ist, die Daten zu emulieren, die von einer Maus zu einem Mikrocomputer übertragen werden, umfassend:
- eine Kamera (21),
- einen Marker (30), der auf einem Teil des Körpers eines Subjekts anzuordnen ist und im Sichtfeld der Kamera (21) zu platzieren ist,
- eine Anzeigevorrichtung (22), die dafür ausgelegt ist, einen Zeiger (40) anzuzeigen, der ein Bild des von der Kamera gefilmten Markers (30) ist, wobei die Anzeigevorrichtung wenigstens einen aktiven Bereich (41, ..., 46; 57) anzeigt, welcher der Auslösung wenigstens einer vorbestimmten Aktion entspricht, wobei die Schnittstelle so konfiguriert ist, dass die Aktion ausgelöst wird, wenn der Zeiger (40) in den aktiven Bereich bewegt wird und sich relativ zu diesem auf eine vordefinierte Weise bewegt,
wobei die Aktion wenigstens eine klassische Funktion einer Maus auf einer üblichen grafischen Schnittstelle umfasst, die aus dem einfachen Klick, dem Doppelklick, der gedrückt gehaltenen/losgelassenen Maustaste, dem kontextuellen Klick und dem Scrollrad ausgewählt ist, wobei die Aktion ausgelöst wird, wenn der Zeiger (40) in den aktiven Bereich bewegt wird und während einer vordefinierten Dauer dort verbleibt, wobei die Schnittstelle wenigstens einen nicht aktiven Bereich (47; 56) definiert, der keine Aktion auslöst, wobei die Schnittstelle ein Übertragungsmittel aufweist, das die auszulösende Aktion an den Mikrocomputer überträgt, so dass der Mikrocomputer die Aktion ausführt.

2. Schnittstelle nach Anspruch 1, wobei der Marker (30) ein gedrucktes oder aufgeklebtes Muster ist.

3. Schnittstelle nach Anspruch 1 oder 2, wobei die größte Abmessung des Markers (30) kleiner oder gleich 3 cm ist und die kleinste Abmessungen des Markers größer oder gleich 0,5 cm ist.

4. Schnittstelle nach einem der vorhergehenden Ansprüche, wobei in Abhängigkeit von der Dauer, während der der Zeiger im aktiven Bereich bleibt, mehrere verschiedene vordefinierte Aktionen ausgeführt werden.

5. Schnittstelle nach einem der vorhergehenden Ansprüche, wobei das Übertragungsmittel drahtlos ist, wobei die Schnittstelle vorzugsweise so konfiguriert ist, dass der Datenaustausch mit dem Mikrocomputer erfolgen kann, ohne dass eine Installation von spezieller Software auf dem Mikrocomputer erforderlich ist, gleichgültig, ob dieser Letztere insbesondere unter "Windows" (eingetragenes Warenzeichen), "Android" (eingetragenes Warenzeichen) oder "iOS" (eingetragenes Warenzeichen) arbeitet.

6. Schnittstelle nach einem der vorhergehenden Ansprüche, wobei die vordefinierte Dauer zwischen 1 und 1000 ms beträgt.

7. Schnittstelle nach einem der vorhergehenden Ansprüche, wobei die Aktion kontinuierlich aufrechterhalten wird, solange der Zeiger (40) nicht den aktiven Bereich verlässt.

8. Schnittstelle nach einem der Ansprüche 1 bis 6, wobei wenigstens ein aktiver Bereich (42) die Anzeige eines Kontextmenüs (50) auslöst, welches wiederum aktive Unterbereiche definiert, die jeweils einer Aktion zugeordnet sind.

9. Schnittstelle nach einem der vorhergehenden Ansprüche, welche wenigstens einen Fernschalter aufweist.

10. Schnittstelle nach einem der vorhergehenden Ansprüche, welche dafür konfiguriert ist, dem Benutzer zu ermöglichen, eine personalisierte Auswahl von Betriebsparametern aus der Form, der Abmessung und dem Ort des aktiven Bereichs oder der aktiven Bereiche und/oder der Aktion oder den Aktionen, die dem jeweiligen aktiven Bereich zugeordnet sind, zu treffen.

11. Schnittstelle nach einem der vorhergehenden Ansprüche, welche so konfiguriert ist, dass sie eine visuelle Tastatur auf dem Bildschirm der Anzeigevorrichtung erscheinen lässt, mit Vorhersage personalisierter Wörter.

12. Schnittstelle nach einem der vorhergehenden Ansprüche, wobei ein aktiver Bereich für einen Notruf reserviert ist, der das Senden einer vorbestimmten Nachricht an wenigstens einen vorregistrierten Empfänger steuert.

13. Verfahren zum Personalisieren einer Schnittstelle nach einem der vorhergehenden Ansprüche, welches die Zuweisung wenigstens einer Aktion zu einem aktiven Bereich und die Wahl einer Anwesenheitsdauer des Zeigers in einem aktiven Bereich, ab der eine Aktion ausgelöst wird, umfasst.

14. Verfahren nach dem vorhergehenden Anspruch, welches die Wahl der Form und des Ortes des aktiven Bereichs in einem Feld, das ein Bild des Sichtfeldes der Kamera ist, umfasst.

## Claims

1. Human-machine interface (10) configured to emulate the data transmitted by a mouse to a microcomputer, including:
- a camera (21),
- a marker (30) to be arranged on a part of the body of a subject and to be placed in the field of the camera (21),
- a display device (22), which is configured to display a pointer (40), which is the image of the marker (30) filmed by the camera, the display device displaying at least one active zone (41, ..., 46; 57) corresponding to the triggering of at least one predetermined action, the interface being configured such that the action is triggered when the pointer (40) is brought into the active zone and moves in a predefined manner relative to said active zone,
the action including at least one conventional function of a mouse on a standard graphical interface, selected from a single click, a double click, click-hold-release, a context click and a scroll wheel, the action being triggered when the pointer (40) is brought into the active zone and remains there for a predefined period of time, the interface defining at least one inactive zone (47; 56) which does not trigger any action, the interface including a transmission means that transmits the action to be triggered to the microcomputer so that the microcomputer performs the action.

2. Interface according to Claim 1, the marker (30) being a printed or adhesively bonded pattern.

3. Interface according to Claim 1 or 2, the largest dimension of the marker (30) being smaller than or equal to 3 cm, and the smallest dimension of the marker being larger than or equal to 0.5 cm.

4. Interface according to any one of the preceding claims, a plurality of different predefined actions being performed depending on the period of time for which the pointer remains in the active zone.

5. Interface according to any one of the preceding claims, wherein the transmission means is wireless, the interface preferably being configured such that the interchange of data with the microcomputer can take place without any specific software needing to be installed beforehand on the microcomputer, whether the latter runs in particular on "Windows" (registered trademark), "Android" (registered trademark) or "iOS" (registered trademark).

6. Interface according to any one of the preceding claims, the predefined period of time being between 1 and 1000 ms.

7. Interface according to any one of the preceding claims, the action being continuously sustained as long as the pointer (40) does not leave the active zone.

8. Interface according to any one of Claims 1 to 6, at least one active zone (42) triggering the display of a context menu (50) which itself defines active sub-zones each associated with an action.

9. Interface according to any one of the preceding claims, including at least one remote contactor.

10. Interface according to any one of the preceding claims, which is configured to allow the user to make a personalized selection of operating parameters from among the shape, the size and the location of the one or more active zones and/or the one or more actions associated with each active zone.

11. Interface according to any one of the preceding claims, which is configured so as to cause an on-screen keyboard to appear on the screen of the display device, with prediction of personalized words.

12. Interface according to any one of the preceding claims, one active zone being reserved for an emergency call, ordering a predetermined message to be sent to at least one pre-registered recipient.

13. Method for personalizing an interface according to any one of the preceding claims, including assigning at least one action to an active zone and selecting a period of presence of the pointer in an active zone after which an action is triggered.

14. Method according to the preceding claim, including selecting the shape and the location of the active zone in a field which is the image of the field of view of the camera.
